(19) Europäisches Patentamt
European Patent Office
Office européen des brevets

(11) EP 0 685 437 B1

(12) **EUROPÄISCHE PATENTSCHRIFT**

(45) Veröffentlichungstag und Bekanntmachung des Hinweises auf die Patenterteilung:
06.11.1996 Patentblatt 1996/45

(51) Int. Cl.$^6$: **C04B 38/00**, F16J 15/34, F16C 33/04

(21) Anmeldenummer: 95108427.6

(22) Anmeldetag: 01.06.1995

(54) **Gleitwerkstoff aus porösem SiC mit trimodaler Porenzusammensetzung**

Sliding member made of porous SiC having trimodal porosity

Matériau glissant en SiC avec une porosité trimodale

(84) Benannte Vertragsstaaten:
**CH DE FR GB IT LI NL**

(30) Priorität: **01.06.1994 DE 4419243**

(43) Veröffentlichungstag der Anmeldung:
**06.12.1995 Patentblatt 1995/49**

(73) Patentinhaber: **Elektroschmelzwerk Kempten GmbH**
**D-81737 München (DE)**

(72) Erfinder:
• **Schwetz, Karl Alexander, Dr.**
**D-87477 Sulzberg (DE)**
• **Katheininger, Anton**
**D-88453 Erolzheim (DE)**
• **Fundus, Michael**
**D-87439 Kempten (DE)**
• **Greim, Jochen, Dr.**
**D-87474 Buchenberg (DE)**

(74) Vertreter: **Potten, Holger et al**
**Wacker-Chemie GmbH**
**Zentralabteilung Patente,**
**Marken und Lizenzen**
**Hanns-Seidel-Platz 4**
**81737 München (DE)**

(56) Entgegenhaltungen:
**EP-A- 0 578 408          WO-A-93/25495**

• **CHEMICAL ABSTRACTS, vol. 114, no. 4, 28.Januar 1991 Columbus, Ohio, US; abstract no. 29012p,**
• **CHEMICAL ABSTRACTS, vol. 113, no. 22, 26.November 1990 Columbus, Ohio, US; abstract no. 196494h,**
• **LUBRICATION ENGINEERING, Bd. 50, Nr. 1, Januar 1994 Seiten 75-80, R.DIVAKAR 'Sintered Silicon Carbides with Controlled Porosity for Mechanical Face Seal Applications'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft Gleitwerkstoffe aus porösem SiC mit trimodaler Porenzusammensetzung sowie ein Verfahren zu ihrer Herstellung.

Dichtes gesintertes SiC zeichnet sich durch hohe Härte, Hochtemperaturfestigkeit, hohe Wärmeleitfähigkeit, Thermoschockbeständigkeit, Oxidationsbeständigkeit, sowie hohen Abrasions- und Korrosionswiderstand aus. Es zeigt auch ein sehr gutes tribologisches Verhalten, worunter das Reibungs- und Verschleißverhalten mit und ohne Schmierung zu verstehen ist. Aus diesem Grunde hat sich gesintertes, reines SiC als nahezu idealer Werkstoff für verschleißbeanspruchte Gleitlager und insbesondere Gleitringdichtungen eingeführt und verdrängt in diesen Anwendungen andere Werkstoffe wie z.B. Aluminiumoxid oder Hartmetall. Insbesondere in Wasserpumpen der Automobilindustrie erreicht der Einsatz serienmäßig gefertigter Gleitringe aus gesintertem SiC einen immer größer werdenden Marktanteil. Dichtes gesintertes SiC besitzt eine Reinheit von $\geqq$ 98,5 % SiC und weist eine Sinterdichte von typisch 3,10 - 3,16 g/cm$^3$, entsprechend einer Restporosität von 1 - 3 Vol.-% auf. Dank seiner hohen Härte (Knoop HK - 0,1 = 2500) und Festigkeit (Biegbruchfestigkeit: ca. 400 MN/m$^2$) ist das gesinterte SiC außergewöhnlich widerstandsfähig gegenüber Verschleiß durch Feststoffpartikel, die in flüssigen Medien mitgeführt werden. Selbst bei einer Kombination von abrasivem und korrosivem Verschleiß ist dieser keramische Werkstoff verschleißfest.

Viele in der Praxis dennoch auftretende Gleitverschleißprobleme sind auf Unterbrechung der idealen, d.h. ordentlich geschmierten Laufbedingungen zurückzuführen, wobei die Gleitflächen der betreffenden Lager oder Dichtungen miteinander in Kontakt kommen, wodurch eine Festkörper - oder Trockenreibung entsteht, die sich in einer stark erhöhten Steigerung des Reibwertes ausdrückt. Lokale Reibwärme führt zu thermischen Spannungsspitzen, die derart intensiv sein können, daß sie das Herausbrechen von Gefügebestandteilen verursachen. Wenn die Schmierung wieder einsetzt (Abkühlung) besteht die Gefahr von Rißbildung und Bruch als Folge des Thermoschocks. Obwohl dichtes, gesintertes SiC mit derartigen Situationen im allgemeinen besser fertig wird als andere Keramiken, besteht ein Bedarf an weiterentwickelten SiC - Gleitwerkstoffen für Anwendungen in Gleitringdichtungen und Gleitlagern, die unter erschwerten hydrodynamischen Bedingungen laufen und deren Zuverlässigkeit gesteigert werden soll.

Solche Versuche, das gesinterte SiC hinsichtlich seiner tribologischen Eigenschaften zu optimieren, sind bereits bekannt geworden. Sie beruhen auf dem Konzept eine zusätzliche geringe Menge an Porosität in Form abgeschlossener Poren mit durchschnittlichen Porengrößen > 10 $\mu$m in das ansonsten dichte SiC - Sintergefüge homogen verteilt einzubringen, um in der Funktionsfläche (Gleitfläche) eine Schmiertaschenfunktion zu erzielen. Durch diese Makroporen erhält nämlich die Funktionsfläche stellenweise Vertiefungen, in denen sich zusätzliche Schmierflüssigkeit aufstauen und ein Reservoir bilden kann. Dieses in den Poren gespeicherte Flüssigkeitsreservoir kann in kritischen Situationen z.B. bei kurzzeitigem Ausfall der Schmierstoffversorgung eine Restschmierung gewährleisten, so daß ein längerer Trockenlauf und ein damit verbundener spontaler Ausfall der Gleitkörper verhindert wird. Dabei müssen die in das SiC Gefüge eingebrachten Makroporen als Einzelporen vorliegen, denn nur dann kann sich in der Pore ein hydraulischer Druck aufbauen. Durchgängige Kanalporen (offene Porosität) sind wegen Förderung der Leckage unbedingt im Gleitwerkstoff zu vermeiden. Da aber die zusätzlich eingebrachte Porosität das keramische Bauteil festigkeitsmäßig schwächen kann, sind der Höhe der Porosität (Vol%) und insbesondere der Porengröße Grenzen gesetzt.

In der DE-PS 39 27 300 der Firma Showa Denko K.K./Tokio werden beispielsweise poröse SiC-Sinterkörper mit einer Gesamtporosität von 4-14 Vol.-% für Gleitringdichtungen vorgeschlagen. Die Poren in diesen drucklos gesinterten SiC-Sinterkörpern sind voneinander unabhängig und geschlossen und weisen eine glattgerundete Oberfläche sowie eine mittlere Porengröße von 10-40 $\mu$m auf. Sie werden entweder auf sintertechnischem Wege (ausgehend von einer Mischung von fein- und grobkörnigen SiC-Pulvern oder über unvollständige Dichtsinterung) oder vorzugsweise durch Einbau von Kunststoffkügelchen in den SiC-Preßling und anschließender Pyrolyse der Kügelchen erzeugt. In letztem Falle kann über die Menge und Größe der Kunststoffkügelchen gezielt eine bestimmte Gesamtporosität und mittlere Porengröße eingestellt werden. Wie aus der Beschreibung hervorgeht, ist insbesondere die mittlere Porengröße von 10 - 40 $\mu$m im resultierenden SiC-Sinterkörper für tribologische Anwendungen als Gleitring von entscheidender Bedeutung: poröse SiC-Sinterkörper mit einer mittleren Porengröße von < 10 $\mu$m sind als Gleitkörper nachteilhaft, wegen des zu geringen Schmiertascheneffektes bei kleinen Poren. Des gleichen sollen auch poröse SiC-Sinterkörper mit einer mittleren Porengröße > 40 $\mu$m für Gleitringe ungeeignet sein u.a. wegen frühzeitiger Leckage (Undichtigkeit) der Gleitringdichtung und erhöhtem Ringverschleiß. Als Begründung für den beobachteten erhöhten Verschleiß wird die nicht ausreichende Festigkeit solcher grobporiger SiC-Sinterkörper angegeben. Beispielsweise war bei SiC-Sinterkörpern 8%iger Porosität infolge Übergang von 10 $\mu$m mittlerer Porengröße auf eine solche von 50 $\mu$m die Festigkeit von 392 MPa (40 kp/mm$^2$) auf 196 MPa (20 kp/mm$^2$), d.h. auf die Hälfte abgefallen. Eine derart herabgesetzte Festigkeit kann nur mit dem Auftreten großer lokaler Defekte (einzelne Riesenporen) oder auch Rissen erklärt werden. Daraus läßt sich folgern, daß in dieser DE-PS wegen herstelltechnischer Mängel die guten tribologischen Eigenschaften ausreichend fester, poröser SiC-Sinterkörper mit mittleren Porengrößen von $\geqq$ 40 $\mu$m nicht erkannt werden konnten.

Aus der Europäischen Patentanmeldung EP-A-486336 der Firma Ceramiques et Composites sind grobporige SiC-Gleitkörper mit einer Gesamtporosität von 4-18 Vol.-% und mittleren Porengrößen im Bereich 40 - 200 $\mu$m bekannt, die mittels Drucklossinterung aus sinterfähigen SiC-Pulvern ebenfalls mit einem porenbildenden Zusatz in Form von Kunststoffkügelchen hergestellt worden sind. Wie aus der Offenbarung und insbesondere den Beispielen ersichtlich, werden jedoch für die tribologische Anwendung dieses "grobporigen Siliciumcarbids", mittlere Porengrößen von 60-100 $\mu$m und Gesamtporositäten von 8-15 Vol.-% bevorzugt. Über die Festigkeit dieser grobporigen SiC-Sinterkörper werden keine Angaben gemacht. Die in dieser EP-Anmeldung beschriebenen SiC-Gleitwerkstoffe können zwar die Dichtungs-und Verschleißanforderungen für den Niederdruckbereich, d.h. für geringe abzudichtende Druckdifferenzen wie z.B. 1 bar erfüllen (siehe Beispiel 1 von EP-A-486336), sie genügen indessen nicht den Anforderungen im Druckbereich $\geqq$ 10 bar. Da bei mittleren Porengrößen im bevorzugten Bereich 60 - 100 $\mu$m und der gleichzeitig hohen Gesamtporosität im Bereich 8 - 15 Vol.-% die SiC-Bauteilfestigkeit beträchtlich reduziert ist, sind auch der Verwendung dieses grobporigen SiC als Gleitring und Gegenring in Hart/Hart Paarungen enge Grenzen gesetzt.

Aus WO 93/25495 der Carborundum Company, USA sind feinporige SiC Sinterkörper mit einer Porosität von 3 bis 15 Vol % bekannt, wobei die Poren ungleichmäßig geformt sind und eine maximale Größe von etwa 3 bis 5 $\mu$m und ein Verhältnis Länge zu Breite (Formfaktor) von 1:1 bis 3:1 haben. Diese Sinterkörper werden unter Verwendung von SiC mit bimodaler Teilchengrößenverteilung, d. h. Mischungen zweier SiC-Pulver mit unterschiedlicher mittlerer Teilchengröße hergestellt. Beispielsweise wird ein feinkörniges sinterfreudiges SiC Pulver der mittleren Teilchengröße 0,5 $\mu$m mit einem weniger sinterfreudigem grobkörnigen SiC Pulver der mittleren Teilchengröße 3$\mu$m vermischt. Obwohl diese Sinterkörper kostengünstiger in Folge Mitverwendung preiswerter grober SiC Pulver hergestellt werden können, ist ihre tribologische Eignung in kritischen Situationen verbesserungsbedürftig, was mit der mangelhaften Schmiertaschenfunktion von Mikroporen kleiner oder gleich 5 $\mu$m erklärt werden kann.

Aus EP-A-578408 der Carborundum Company, USA sind grobporige SiC Sinterkörper mit einer Porosität von 2 bis 12 Vol.% bekannt, bei denen die Poren sphärisch geformt sind und einen Durchmesser von 50 bis 500 $\mu$m besitzen. Diese grobporigen SiC Sinterkörper sind im wesentlichen bereits durch die EP-A-486336 der Ceramiques & Composites vorbeschrieben.

Es stellte sich die Aufgabe, den an sich bekannten SiC-Gleitwerkstoff hinsichtlich seiner tribologischen und mechanischen Eigenschaften weiter zu verbessern, damit er für ein breites Anwendungsspektrum genutzt werden kann, worunter beispielsweise zu verstehen ist, daß er sowohl bei Niederdruck als auch bei hohem Druck in der Paarung mit Graphit als auch in Paarung mit sich selbst eingesetzt werden kann.

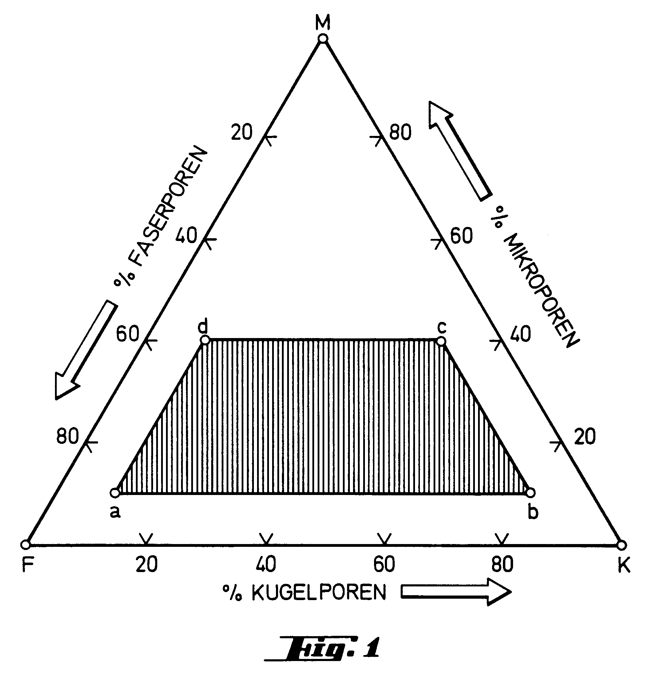

Diese Aufgabe wird erfindungsgemäß gelöst durch einen porösen Gleitwerkstoff aus drucklos gesintertem SiC mit 3 bis 10 Vol.% unabhängigen geschlossenen Poren der dadurch gekennzeichnet ist, daß er eine trimodale Porenzusammensetzung bestehend aus Mikroporen (M), faserförmigen Makroporen (F) und kugelförmigen Makroporen (K) aufweist, deren mengenmäßige Anteile im Porensystem F - M - K (Figur 1) durch die Trapezfläche mit den Eckpunkten

$$a = 10\%M - 80\%F - 10\%K$$

$$b = 10\%M - 10\%F - 80\%K$$

$$c = 40\%M - 10\%F - 50\%K$$

$$d = 40\%M - 50\%F - 10\%K$$

festgelegt sind und die Mikroporen einen Durchmesser von kleiner oder gleich 5 $\mu$m und die faserförmigen Makroporen eine Durchmesser von kleiner oder gleich 30 $\mu$m und eine Länge von kleiner oder gleich 80 $\mu$m und die kugelförmigen Makroporen einen Durchmessser von kleiner oder gleich 70 $\mu$m besitzen und die Biegebruchfestigkeit mindestens 250 MN/m$^2$ beträgt.

Die Mikroporen liegen in einer Porengrößenverteilung von 0,1 $\mu$m bis 5 $\mu$m vor.

Der Formfaktor der faserförmigen Makroporen beträgt vorzugsweise 2:1 bis 50:1 in der Regel 2:1 bis 20:1.

Die Größenverteilung der faserförmigen Makroporen liegt vorzugsweise in den Bereichen $d_F$= 5 bis 25 $\mu$m und $l_F$= 10 bis 80 $\mu$m ($d_F$: Faserdurchmesser, $l_F$: Faserlänge). Besonders bewährt haben sich Faserporendurchmesser von 8 bis 20 $\mu$m und Faserporenlängen von 20 bis 70 $\mu$m.

Die kugelförmigen Makroporen liegen vorzugsweise in einer Größenverteilung von 30 bis 70 $\mu$m, besonders bevorzugt in einer Größenverteilung von 40 bis 60 $\mu$m vor.

Die neben den Poren vorliegende dichte SiC-Gefügematrix besteht aus $\alpha$-Siliciumcarbid mit bis zu 2 Gewichtsprozent (Summe) elementarem Kohlenstoff, Aluminium und/oder Bor, wobei das $\alpha$-SiC vorzugsweise in Form prismatischer, plattenförmiger Kristallite einer mittleren Korngröße < 50 $\mu$m vorliegt.

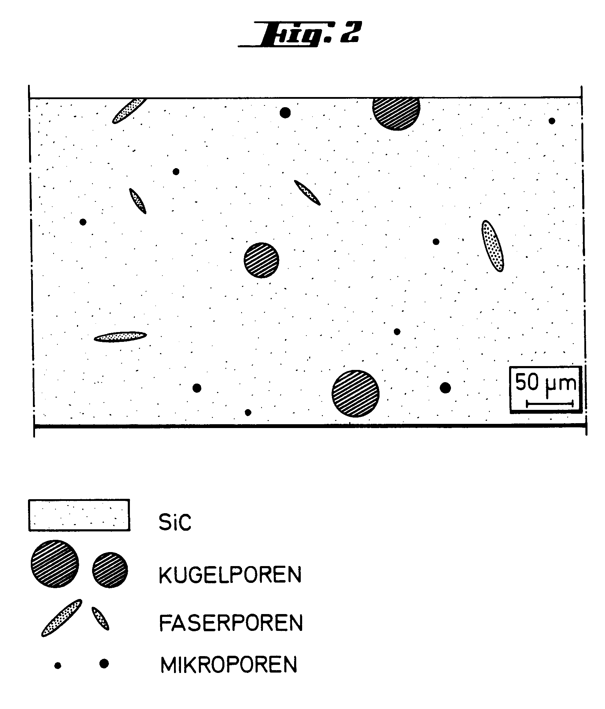

Der schematische Werkstoffaufbau ist in Figur 2 dargestellt.

Für die Herstellung der erfindungsgemäßen SiC-Gleitwerkstoffe wird als SiC-Ausgangspulver vorteilhaft handelsübliches $\alpha$-SiC mit einer Teilchengrößenverteilung < 5 $\mu$m, vorzugsweise < 3 $\mu$m und einer spezifischen Oberfläche von 10 - 15 m$^2$/g (gemessen nach BET), und einer Reinheit von mindestens 99,5%, bezogen auf die metallischen Verunreinigungen verwendet.

Als Makroporen liefernde Zusätze werden organische Kurzfasern und Kunststoffkügelchen verwendet, die auf Grund ihrer niedrigen Zersetzungstemperatur (< 800°C) bei der Weiterverarbeitung des SiC-Preßlings vor dem eigentlichen Sintervorgang definierte Hohlräume in Form von Faserporen und Kugelporen bilden.

Als Fasermaterial können zerkleinerte und größenklassierte Synthese - oder Pflanzenfasern wie beispielsweise Baumwoll-, Flachs-, Zellstoff- oder Cellulosefasern, Polyamid-, Polyester- und Polyacrylnitrilfasern Verwendung finden, wobei sich reine Cellulosefasern besonders bewährt haben.

Als Kugelmaterial eignen sich thermoplastische und duroplastische Kunststoffe wie z.B. Polymethacrylate, Polyethylene, Polystyrole, Polyamide und Bakelite. Vorzugsweise werden Polymethacrylat - Kügelchen insbesondere Polymethacrylsäuremethylester - Kügelchen (PMMA) in einer enggerafften Größenverteilung eingesetzt.

Die Gesamtmenge der Faserporen und Kugelporen bildenden Zusätze, ihre relativen Anteile sowie ihre Größenverteilung sind für die Herstellung und Eigenschaften der erfindungsgemäßen SiC-Gleitwerkstoffe von entscheidender Bedeutung.

Die Faserporen bildenden Zusätze haben vorzugsweise eine Länge von 15 bis 90 $\mu$m und einem Durchmesser von 8 bis 30 $\mu$m. Besonders bevorzugt sind Längen von 30 bis 80 $\mu$m und Durchmesser von 10 bis 25 $\mu$m.

Die Kugelporen bildenden Zusätze haben vorzugsweise einen Kugeldurchmesser von 40 bis 80 $\mu$m. Besonders bevorzugte wird ein Durchmesserbereich von 50 bis 70 $\mu$m.

Kugeln mit einem Durchmesser von > 80 $\mu$m sollten vermieden werden, da sie bei der Formgebung zu rißhaltigen Grünkörpern führen können.

Die Größenverteilung der Makroporen bildenden Zusätze ist für die Erzielung der Eigenschaften, insbesondere der Festigkeitseigenschaften der erfindungsgemäßen Gleitkörper von großer Wichtigkeit. Eigene Versuche haben gezeigt, daß mit breiteren Größenverteilungen der Makroporen ein für kritische spezifische Bauteilbelastungen geforderte Biegefestigkeit der Gleitwerkstoffe von > 250 MN/m$^2$ nicht mehr erreicht werden kann. Dies kann auf die Anwesenheit weniger, als kritische Fehlstellen wirkende, Makroporen mit Durchmessern von > 100 $\mu$m und/oder die Poren verknüpfende Risse zurückgeführt werden.

Die relativen Anteile der Faserporen und Kugelporen bildenden Zusätze, werden so gewählt, daß die Gewichtsverhältnisse Kurzfasern : Kugeln zwischen 9 : 1 und 1 : 9 liegen. Die besten Ergebnisse werden im Bereich Kurzfasern : Kugeln von 4 : 1 bis 1 : 4 erzielt.

Zur Herstellung des erfindungsgemäßen Werkstoffes wird das SiC-Ausgangspulver in an sich bekannter Weise zusammen mit bis zu 7 Gew.% an üblichen Sinteradditiven und Preßhilfsmitteln zu einem Schlicker verarbeitet und anschließend in geeigneter Weise, beispielsweise durch Sprühtrocknung des vorgefertigten Schlickers zu einem freifließenden Granulat verarbeitet.

Geeignete Sinteradditive sind beispielsweise elementarer Kohlenstoff, elementares Aluminium, elementares Bor, Aluminiumnitrid und Borcarbid, wobei sich besonders elementarer Kohlenstoff in Form von partikulärem Graphit oder Ruß und feinteiliges Aluminiumnitridpulver bewährt haben.

Geeignete Presshilfsmittel sind beispielsweise Polyvinylalkohol, Polyvinylacetat, Aluminiumstearat, Polyacrylat, Polyether und Zucker. Vorteilhaft wird als Presshilfsmittel Polyvinylalkohol das unter dem Namen Polyviol bei der Firma Wacker-Chemie GmbH, München, erhältlich ist zusammen mit Zucker (Saccharose) eingesetzt.

Dem trockenen SiC-Granulat werden die makroporenliefernden organischen Zusätze in Form von organischen Kurzfasern und Kügelchen enger Größenverteilung in einer Menge von vorzugsweise 1 - 3,5 Gewichtsteilen bezogen auf das mit den Sinterhilfsmitteln dotierte SiC-Pulver unter Mischen zugefügt. Es wird gemischt bis eine homogene preßfertige Mischung entstanden ist. Dies kann beispielsweise in einem Trockenmischer geschehen.

Man kann jedoch auch - was in der Massenfertigung aus Kostengründen von Vorteil ist - ohne diese getrennte Trockenmisch- Verfahrensstufe direkt über die Sprühtrocknung die preßfertige Mischung herstellen, indem die porenbildenden Zusätze in den genannten Mengen dem Sprühschlicker eingemischt werden.

Die preßfertige Mischung wird anschließend unter Formgebung beispielsweise durch axiales Gesenkpressen oder isostatisches Pressen zu Grünkörpern verpreßt. Dabei hat sich überraschenderweise gezeigt, daß die erfindungsgemäßen preßfertigen SiC-Mischungen, die Fasern enthalten gegenüber solchen Mischungen ohne Faseranteil (z.B. Mischungen mit ausschließlich Kugeln als Makroporenzusatz oder Mischungen ohne Makroporenzusatz) preßtechnische Vorteile bieten. Der Fasergehalt verringert beim Gesenkpressen die Rückdehnung und Rißbildung der Preßkörper und es werden "faserverstärkte Grünkörper" mit einer Bruchfestigkeit erhalten, die etwa 20 bis 60 % größer ist als die Bruchfestigkeit ohne Fasern.

Durch die verringerte Rückdehnung können induzierte Spannungen im Festkörper, die zu Rissen führen können, vermindert werden. Eine hohe Festigkeit der Preßkörper ist für ihre ausschußfreie Weiterverarbeitung z.B. über eine Grünbearbeitung sowie die Lagerung, den Transport der Grünteile etc. von großer Wichtigkeit.

Die gepreßten Formkörper werden anschließend einer 10 bis 24 stündigen Wärmebehandlung bei Temperaturen im Bereich zwischen 100° und 1000°C in Gegenwart einer inerten Atmosphäre unterzogen, um die Presshilfsmittel zu entfernen und die Poren bildenden Zusätze zu pyrolysieren. Anschließend werden die vorerhitzten Formkörper bei einer Temperatur von 2000°C - 2100°C in Gegenwart einer Schutzgasatmosphäre oder im Vakuum 20 bis 60 min lang bis zur Bildung der erfindungsgemäßen SiC-Gleitkörper drucklos gesintert.

Während der Sinterung erfahren die Formkörper sowie die Makroporen eine 17-19%ige Schrumpfung, bezogen auf den Durchmesser der Preßkörper bzw. die in ihnen vorliegenden Makroporen und es bilden sich die Mikroporen mit einer Größenverteilung < 5 μm, deren Volumenanteil über die Preßdichte sowie Sinterparameter (Endtemperatur/Haltezeit) in an sich bekannter Weise eingestellt werden kann.

Die nach dem erfindungsgemäßen Verfahren hergestellten SiC-Sinterkörper weisen eine Gesamtporosität von 3 - 10 Vol.-% und Biegebruchfestigkeit von über 250 MN/m$^2$ auf.

Die porösen SiC-Gleitwerkstoffe lassen sich als Dichtringe in axialen Gleitringdichtungen in der Paarung Hart/Weich gegen Kohlegraphit oder in der Paarung Hart/Hart gegen sich selbst verwenden. Sie eignen sich ebenso zur Herstellung von Wellenschutzhülsen und Bauteilen für Gleitlager, deren Verschleißfestigkeit und Zuverlässigkeit verbessert werden soll.

Die in der Beschreibung und den Beispielen der Erfindung angegebenen Gesamtporositäten P wurden aus den Meßwerten der Sinterdichte $D_S$ und Reindichte $D_R$ gemäß:

$$P = (1 - \frac{D_S}{D_R}) \cdot 100 \ [\text{Vol.-\%}]$$

berechnet.

Die Porenzusammensetzung, d.h. die Prozentanteile der Faser-, Kugel- und Mikroporen, sowie die Porengrößenverteilung der Makroporen wurden keramographisch durch ein halbautomatisches Bildanalyseverfahren anhand ungeätzter Gefügebilder von polierten Anschliffen der Gleitkörper bestimmt.

Figur 1 zeigt den Bereich der erfindungsgemäßen Porenzusammensetzung im Porensystem Mikroporen (M), faserförmige Makroporen (F) und kugelförmige Makroporen (K) (F-M-K), wobei die Punkte im System folgenden Grenzwerten der Porenzusammensetzung entsprechen:

| Punkt im System | Porenzusammensetzung | | |
|---|---|---|---|
| | % Mikroporen | % Faserporen | %Kugelporen |
| F | 0 | 100 | 0 |
| K | 0 | 0 | 100 |
| M | 100 | 0 | 0 |
| a | 10 | 80 | 10 |
| b | 10 | 10 | 80 |
| c | 40 | 10 | 50 |
| d | 40 | 50 | 10 |

Figur 2 zeigt den schematischen werkstoffaufbau des erfindungsgemäßen Gleitwerkstoffes

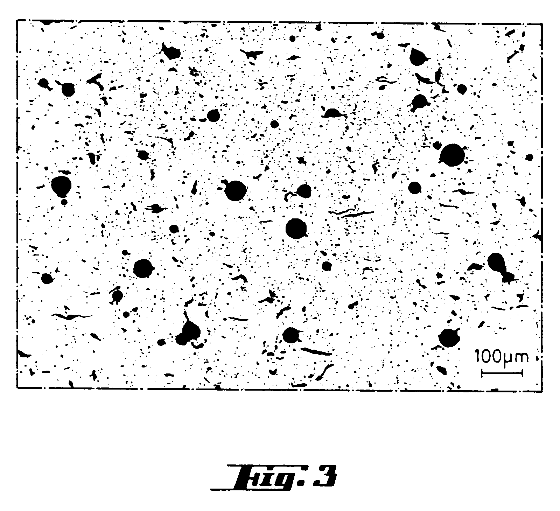

Figur 3 zeigt das Gefüge eines durch Drucklossinterung von α-SiC mit Faser- und Kugelporen bildenden Zusätzen erhaltenen Sinterkörpers einer Sinterdichte von 3,02 g/cm$^3$, einer Biegebruchfestigkeit von 310 MN/m$^2$, einer Gesamtporosität von 5,3 Vol.-% und der Porenzusammensetzung 38 % Faserporen - 42% Kugelporen - 20% Mikroporen. Die kugelförmigen Makroporen haben einen Durchmesser von kleiner oder gleich 60 μm. Die faserförmigen Makroporen weisen Durchmesser von kleiner oder gleich 20 μm und Längen von kleiner oder gleich 70 μm auf. Der Durchmesser der Mikroporen liegt bei kleiner oder gleich 5μm.

In den folgenden Beispielen werden die erfindungsgemäßen SiC-Gleitwerkstoffe, ihre Herstellung und ihre Vorteile in tribologischen Anwendungen weiter beschrieben.

Beispiel 1

Herstellung eines erfindungsgemäßen Gleitringes

Als Ausgangsmaterial wurde feines α-SiC Sinterpulver mit einer mittleren Teilchengröße von 0,6 μm und einer spezifischen Oberfläche von 12 m$^2$ pro Gramm verwendet. Der Restsauerstoffgehalt lag bei 0,6 Gewichtsprozent. Es wurde ein wäßriger Schlicker nach folgender Rezeptur zubereitet:

| α-SiC-Sinterpulver | 98,0 Gewichtsteile (GT) |
|---|---|
| Kohlenstoff-Zusatz (Ruß) | 1,0 GT |
| Aluminium-Zusatz (AlN) | 1,0 GT |
| "dotiertes Sinterpulver | 100,0 GT |
| Kunststoffkugeln d=50-70μm(PMMA) | 1,0 GT |
| Cellulose-Kurzfasern d = 10-25 μm , l = 30-80 μm | 1,0 GT |
| Preßhilfsmittel (2,5 GT Zucker und 2,0 GT Polyviol) | 4,5 GT |

Zunächst wurde unter Rühren eine 60%ige Dispersion des SiC-Pulvers in Wasser hergestellt, in dem zuvor die Dotierungs- und Preßhilfsmittel gelöst bzw. aufgeschlämmt worden waren. Nach erfolgter Homogenisierung dieser Dispersion wurden die Cellulosefasern und die Kunststoffkugeln untergerührt, ein Litergewicht von 1650 g/l durch Verdünnen eingestellt und der so fertig aufbereitete Schlicker über einen Sprühtrockner unter Standardbedingungen getrocknet.

Das erhaltene rieselfähige Preßgranulat wurde schließlich durch Gesenkpressen in einem Trockenpreßautomat unter einem Druck von 100 MPa zu Gleitringen der Preßdichte 1,80 g/cm$^3$ mit den ungefähren Abmessungen $d_a$ = 88, $d_i$ = 66, h = 28 mm verarbeitet. Hierauf wurden die Preßteile in einem Verkokungsofen 12 Stunden zur schonenden Entfernung der Gleit- und Bindemittel sowie zur langsamen Pyrolyse der organischen Porenbildner unter strömendem Argonschutzgas auf 800°C vorerhitzt.

Die auf Raumtemperatur abgekühlten entbinderten Gleitringe wurden anschließend in Graphittiegeln, die in der Heizzone eines Graphitrohrofens eingesetzt waren, 30 min bei 2050°C und einem Grobvakuum von 20 mbar gesintert. Die Sinterkörper mit einer Reindichte von 3,19 g pro cm$^3$ erfuhren eine 18%ige lineare Schrumpfung bezogen auf den Durchmesser der Ringe und zeigten eine Sinterdichte von durchschnittlich 3,02 g pro cm$^3$, entsprechend einer Gesamtporosität von 5,3 Vol.-%.

Die Charakterisierung der gepreßten Ringe sowie der gesinterten Formkörper ist in Tabelle 1 zusammengefaßt. Die Figur 3 zeigt ein lichtmikroskopisches Gefügebild im Maßstab 1 : 100 eines hochglanzpolierten Anschliffes eines gesinterten Gleitringes. Deutlich sind die drei verschiedenen Porenarten als schwarze Flächen bzw. Punkte erkennbar. Durch Bildanalyse ergab sich ein Faserporenanteil von 38 %, ein Kugelporenanteil von 42%, ein Mikroporenanteil von 20%. Das nach einer Plasmaätzung entwickelte SiC-Mikrogefüge zeigt SiC-Kristallite der mittleren Korngröße von 30 μm.

Beispiel 2-5

Herstellung weiterer erfindungsgemäßer Gleitringe

SiC-Gleitringe wurden in der gleichen Weise wie in Beispiel 1 hergestellt nur mit den Abänderungen, daß die Gesamtmenge sowie die Anteile der porenbildenden Zusätze Cellulose und PMMA-Kunststoffkügelchen in ihrem Gewichtsverhältnis zueinander (Beispiele 2 und 3) variiert, als Porenbildner ausschließlich der kugelförmige Makroporen liefernde PMMA-Zusatz (Beispiel 4) oder überhaupt kein Makroporen bildender Zusatz (Beispiel 5) verwendet wurde. Im letzteren Falle d.h. ohne Porenbildner - Zusatz resultiert der dichte SSiC-Standardwerkstoff. Die Beispiele 2-3 betreffen den erfindungsgemäßen Gleitwerkstoff, wobei die Porenzusammensetzung (Faser-/Kugel-/Mikroporenanteile) und die Gesamtporosität variiert wurden. Die Beispiele 4 und 5 sind Vergleichsbeispiele mit aus dem Stand der Technik bekannten Werkstoffen.

Die Charakterisierungen der Ansätze, der gepreßten Grünkörper sowie der gesinterten Formkörper sind in Tabelle 1 zusammen mit den entsprechenden Daten des Beispiels 1 zusammengefaßt.

Tabelle 1

| Charakterisierung der Ansätze, Preßkörper und Sinterkörper | | | | | |
|---|---|---|---|---|---|
| | Beispiel Nr. | | | | |
| | 1 | 2 | 3 | 4 | 5 |
| Zusatz organ. Porenbildner | 1,0 Fasern | 2,0 Fasern | 0,5 Fasern | keine Fasern | keine Fasern |
| (Gewichtsteile auf 100 GT dot. SiC) | 1,0 Kugeln | 1,0 Kugeln | 1,5 Kugeln | 2,0 Kugeln | keine Kugeln |
| Preßdichte (g/cm$^3$) | 1,80 | 1,81 | 1,79 | 1,75 | 1,82 |
| Rückdehnung der Preßkörper(%) | 0,62 | 0,62 | 0,63 | 0,7 | 0,74 |
| Biegebruchfestigkeit der Preßkörper (MN/m$^2$) | 1,49 | 1,62 | 1,23 | 1,00 | 1,09 |
| Sinterdichte der Sinterkörper (g/cm$^3$) | 3,02 | 2,96 | 3,01 | 3,01 | 3,15 |
| Biegebruchfestigkeit* (MN/m$^2$) | 310 | 264 | 307 | 293 | 402 |
| Gesamtporosität** (Vol.-%) | 5,3 | 7,2 | 5,6 | 5,6 | 1,3 |
| Porenzusammensetzung | | | | | |
| % Faserporen | 38 | 54 | 25 | - | - |
| % Kugelporen | 42 | 31 | 56 | 79 | - |
| % Mikroporen | 20 | 15 | 19 | 21 | 100 |
| Porengrößenverteilung*** | | | | | |
| l/d Faserporen ($\mu$m) | ≦ 70/≦ 20 | ≦ 80/ ≦ 19 | ≦ 70/ ≦ 16 | - | - |
| d Kugelporen ($\mu$m) | ≦ 60 | ≦ 56 | ≦ 58 | ≦ 60 | - |
| d Mikroporen ($\mu$m) | ≦ 5 | ≦ 5 | ≦ 5 | ≦ 5 | ≦ 5 |

\* ...Dreipunktmethode (Prüfstäbchen 3 x 3 x 30 mm, Auflageweite 25 mm),
\*\* ...bezogen auf Reindichte 3,19 g/cm$^3$
\*\*\*... l = Länge, d = Durchmesser

Beispiel 6

Ergebnisse der Gleitring-Prüfstandstests

Zur Ermittlung der tribologischen Kennwerte (Reibwert und Verschleiß) in den Paarungen Hart/Weich und Hart/Hart wurde eine Anzahl von erfindungsgemäßen Testringen nach Bearbeitung auf die erforderlichen Endabmessungen und Planläppen mit losem B$_4$C-Korn 320 im Vergleich zu Testringen aus konkurrierenden Werkstoffen getestet. Hierfür stand ein Gleitringdichtungsprüfstand (Fa. Burgmann) zur Verfügung mit dem die tribologischen Kennwerte bis zu Mediendrücken von 125 bar bei einer konstanten Temperatur von 60°C und einer Umfangsgeschwindigkeit von 9 m pro Sekunde und unter Verwendung von entmineralisiertem Wasser als abzudichtendes Medium gemessen werden konnten. Die Ergebnisse der tribologischen Prüfstandversuche sind in den Tabellen 2 und 3 zusammengefaßt.

Tabelle 2

EP 0 685 437 B1

**Tabelle 2:** Tribologische Kennwerte von Gleitringdichtungsringen in der Paarung Hart / Weich, SSiC Ring gegen Kohlegraphitring*
   Burgmann - Hochdruckprüfstand: Prüfdichtung: H 74N/53, Schmiermedium: VE-Wasser, Temperatur 60°C,
   Mittlere Gleitgeschwindigkeit : 9 n/s
   Versuchsdauer pro Druckstufe: 48 h ( Ausnahme 10 bar: 168 h )

| Druckdifferenz (bar) | SSiC-Ring Beispiel 1 | | SSiC-Ring Beispiel 4 | | SSiC-Ring Beispiel 5 | |
|---|---|---|---|---|---|---|
| | Reibwert | Verschleiß(µm/h) | Reibwert | Verschleiß (µm/h) | Reibwert | Verschleiß (µm/h) |
| 10 | 0,135 | < 0,020 | 0,140 | < 0,020 | 0,164 | < 0,020 |
| 25 | 0,083 | 0,021 | 0,089 | 0,031 | 0,108 | 0,055 |
| 50 | 0,065 | 0,025 | 0,070 | 0,075 | 0,077 | 0,102 |
| 75 | 0,055 | 0,040 | 0,061 | 0,083 | 0,065 | 0,133 |
| 100 | 0,040 | 0,050 | 0,049 | 0,089 | 0,058 | 0,150 |
| 125 | 0,035 | 0,062 | 0,040 | 0,092 | 0,055 | 0,165 |

*......... Kohlegraphit " Buko 1 ", Fa. Burgmann

Tabelle 3: Tribologische Kennwerte von Gleitringdichtungsringen in der Paarung Hart / Hart, SSiC Ring gegen SSiC Ring gleichen Materials.
Burgmann - Hochdruckprüfstand: Prüfdichtung: H 74N/53
Medium: VE - Wasser, Temperatur: 60° C, Mittlere Gleitgeschwindigkeit: 9 m/s, Versuchsdauer pro Druckstufe: 48 h

| Druckdifferenz ( bar) | SSiC - Ring Beispiel 3 | | SSiC - Ring Beispiel 4 | | SSiC - Ring Beispiel 5 | |
|---|---|---|---|---|---|---|
| | Reibwert | Verschleiß (μm/h) | Reibwert | Verschleiß (μm/h) | Reibwert | Verschleiß (μm/h) |
| 25 | 0,149 | < 0,02 | 0,160 | 0,035 | 0,178 | 0,045** |
| 50 | 0,088 | <0,02 | 0,090 | 0,068 | - | *** |

** ......... starke Kantenabplatzer

*** ......... Versuch mußte abgebrochen werden : starker Adhäsionsverschleiß, Kantenabplatzer, zerrüttete Gleitfläche und Leckage!

Aus den Versuchen in der Hart/Weich-Paarung (siehe Tabelle 2) geht eindeutig hervor, daß poröse SSiC-Ringe ( Gesamtporosität ca. 5 Vol.-%) mit einer Porenzusammensetzung 80 % Makroporen - 20 % Mikroporen bei allen Druckstufen einen geringeren Reibwert und auch Verschleiß als Ringe aus dichtem SSiC (Beispiel 5, Standard-SSiC, 100 % Mikroporen, Gesamtporosität 1,3 Vol.-%) aufweisen. Wie aus dem tribologischen Vergleich der Ringe von Beispiel 1 und 4 hervorgeht, führt die Änderung der Porenzusammensetzung, d.h. die nahezu 50%ige Substitution der kugelförmigen Makroporen durch faserförmige Makroporen überraschenderweise zu einer nochmaligen Reduzierung des Verschleißes bei Drücken von 25-125 bar um durchschnittlich 30%.

Auch die Gleitringtests der Hart/Hart-Paarung (siehe Tabelle 3), in denen neben erfindungsgemäßen Ringen aus Beispiel 3 zum Vergleich auch Ringe der Beispiele 4 und 5 im Hochdruckbereich 25 und 50 bar eingesetzt wurden, bestätigen ebenfalls die optimale Eignung des erfindungsgemäßen Werkstoffes mit trimodaler Porenzusammensetzung. Diese Hart/Hart-Paarung empfiehlt sich insbesondere zur Abdichtung in schleißenden und chemisch aggressiven Medien. Der Verschleiß war in allen Fällen geringer als 0,02 $\mu$m pro Stunde. Demnach kann in porösem SiC mit der trimodalen Porenzusammensetzung 25% Faserporen - 56% Kugelporen - 19% Mikroporen im Vergleich zu der bimodalen Porenzusammensetzung 79% Kugelporen - 21 % Mikroporen ein beträchtlich verbessertes tribologisches Verhalten eingestellt werden. Am schlechtesten für die Hart/Hart-Paarung erwies sich das 100% Mikroporen enthaltende dichte SiC aus Beispiel 5. Es trat in diesem Fall verstärkter Verschleiß durch Materialabplatzungen und schließlich Leckage aus, wie sie typischerweise durch Adhäsion infolge fehlender genügender Porosität auftreten.

Die vergleichenden Prüfstandsergebnisse zeigen insgesamt, daß mit dem erfindungsgemäßen SiC-Gleitwerkstoff ein tribologisch optimierter Werkstoff zur Verfügung steht, der es gestattet, Gleitpaarungen aus SiC/Kohlegraphit und SiC/SiC in Gleitringdichtungen verschleißmäßig höher zu belasten als dies mit Standardwerkstoffen möglich ist.

**Patentansprüche**

1.  Poröser Gleitwerkstoff aus drucklos gesintertem SiC mit 3 bis 10 Vol.% unabhängigen geschlossenen Poren der dadurch gekennzeichnet ist, daß er eine trimodale Porenzusammensetzung bestehend aus Mikroporen (M), faserförmigen Makroporen (F) und kugelförmigen Makroporen (K) aufweist, deren mengenmäßige Anteile im Porensystem F - M - K (Figur 1) durch die Trapezfläche mit den Eckpunkten

    $$a = 10\%M - 80\%F - 10\%K$$

    $$b = 10\%M - 10\%F - 80\%K$$

    $$c = 40\%M - 10\%F - 50\%K$$

    $$d = 40\%M - 50\%F - 10\%K$$

    festgelegt sind und die Mikroporen einen Durchmesser von kleiner oder gleich 5 $\mu$m und die faserförmigen Makroporen eine Durchmesser von kleiner oder gleich 30 $\mu$m und eine Länge von kleiner oder gleich 80 $\mu$m und die kugelförmigen Makroporen einen Durchmessser von kleiner oder gleich 70 $\mu$m besitzen und die Biegebruchfestigkeit mindestens 250 MN/m$^2$ beträgt.

2.  SiC-Gleitwerkstoffe gemäß Anspruch 1, dadurch gekennzeichnet, daß die neben den Poren vorliegende dichte SiC-Gefügematrix aus $\alpha$-Siliciumcarbid in Form prismatischer, plattenförmiger Kristallite einer mittleren Korngröße < 50 $\mu$m mit bis zu 2 Gewichtsprozent (Summe). elementarem Kohlenstoff, Aluminium und/oder Bor besteht.

3.  Verfahren zur Herstellung von porösen Gleitwerkstoffen gemäß Anspruch 1 oder 2, dadurch gekennzeichnet, daß dem mit Sinteradditiven und Preßhilfsmitteln versetzten feinteiligen $\alpha$-SiC-Pulver organische Kurzfasern und Kunststoffkügelchen enger Größenverteilung im Gewichtsverhältnis Fasern zu Kugeln von 9 zu 1 bis 1 zu 9, in einer Menge von 1 bis 3,5 Gewichtsteilen bezogen auf das dotierte SiC-Pulver zugesetzt werden, die homogenisierte Pulvermischung unter Formgebung zu Grünkörpern verpreßt, die Grünkörper in Gegenwart einer Schutzatmosphäre bei Temperaturen bis 1000°C vorerhitzt und die vorerhitzten Grünkörper anschließend bei Temperaturen von 2000°C bis 2100°C bis zur Bildung von Sinterkörpern einer Dichte von 90% bis 97% der Reindichte des Siliciumcarbids gesintert werden.

4.  Verfahren nach Anspruch 3, dadurch gekennzeichnet, daß als Sinteradditive Aluminiumnitrid und/oder Bor sowie Kohlenstoff in Mengen bis zu 2 Gewichtsprozent verwendet werden.

5.  Verfahren nach Anspruch 3 oder 4, dadurch gekennzeichnet, daß als organische Kurzfasern Cellulose mit einer Größenverteilung von $d_F$ = 8 - 30 $\mu$m und $l_F$ = 15 - 90 $\mu$m ($d_F$ = Faserdurchmesser, $l_F$ = Faserlänge) eingesetzt werden.

6. Verfahren nach einem oder mehreren der Ansprüche 3 bis 5, dadurch gekennzeichnet, daß als Kunststoffkugeln Polymethacrylsäuremethylester-Kugeln (PMMA) mit einer Größenverteilung $d_K$ = 40 - 80 $\mu$m ($d_K$ = Kugeldurchmesser) eingesetzt werden.

7. Verfahren nach einem oder mehreren der Ansprüche 3 bis 6, dadurch gekennzeichnet, daß die Sinterung der vorerhitzten Grünkörper in Gegenwart einer inerten Atmosphäre bei einem Druck von $\leqq$ 30 mbar durchgeführt wird.

8. Verwendung der porösen SiC-Gleitwerkstoffe gemäß Anspruch 1 oder 2 als Dichtringe in axialen Gleitringdichtungen in der Paarung Hart/Weich gegen Kohlegraphit oder in der Paarung Hart/Hart gegen sich selbst.

9. Verwendung der porösen SiC-Gleitwerkstoffe gemäß Anspruch 1 oder 2 in Form von Wellenschutzhülsen und Bauteilen für Gleitlager.

## Claims

1. Porous bearing material of pressureless-sintered SiC having from 3 to 10% by volume of independent closed pores, which is characterized in that the material has a trimodal pore composition consisting of micropores (M), fibre-shaped macropores (F) and spherical macropores (S), whose amounts in the pore system F - M - S (Figure 1) are fixed by the trapezoidal area having the corner points

$$a = 10\%M - 80\%F - 10\%S$$

$$b = 10\%M - 10\%F - 80\%S$$

$$c = 40\%M - 10\%F - 50\%S$$

$$d = 40\%M - 50\%F - 10\%S$$

and the micropores have a diameter of less than or equal to 5 $\mu$m and the fibre-shaped macropores have a diameter of less than or equal to 30 $\mu$m and a length of less than or equal to 80 $\mu$m and the spherical macropores have a diameter of less than or equal to 70 $\mu$m, and the flexural strength is at least 250 MN/m$^2$.

2. SiC bearing materials according to Claim 1, characterized in that the dense SiC matrix present besides the pores comprises $\alpha$-silicon carbide in the form of prismatic, tabular crystallites having an average size < 50 $\mu$m with up to 2% by weight (total) of elemental carbon, aluminium and/or boron.

3. Process for producing porous bearing materials according to Claim 1 or 2, characterized in that to the finely divided $\alpha$-SiC powder admixed with sintering additives and pressing aids there are added organic short fibres and plastic spheres of narrow size distribution in a weight ratio of fibres to spheres of from 9 : 1 to 1 : 9, in an amount of from 1 to 3.5 parts by weight based on the doped SiC powder, the homogenized powder mixture is pressed and shaped to give green bodies, the green bodies are preheated in the presence of a protective atmosphere at temperatures up to 1000°C and the preheated green bodies are subsequently sintered at temperatures of from 2000°C to 2100°C to form sintered bodies having a density of from 90% to 97% of the matrix density of the silicon carbide.

4. Process according to Claim 3, characterized in that the sintering additives used are aluminium nitride and/or boron and also carbon in amounts of up to 2% by weight.

5. Process according to Claim 3 or 4, characterized in that the organic short fibres used are cellulose having a size distribution of $d_F$ = 8 - 30 $\mu$m and $l_F$ = 15 - 90 $\mu$m ($d_F$ = fibre diameter, $l_F$ = fibre length).

6. Process according to one or more of Claims 3 to 5, characterized in that the plastic spheres used are poly(methyl methacrylate) spheres (PMMA) having a size distribution $d_S$ = 40 - 80 $\mu$m ($d_S$ = sphere diameter).

7. Process according to one or more of Claims 3 to 6, characterized in that the sintering of the preheated green bodies is carried out in the presence of an inert atmosphere at a pressure of $\leqq$ 30 mbar.

8. Use of the porous SiC bearing materials according to Claim 1 as sealing rings in axial floating-ring seals in the pairing hard/soft against graphite or in the pairing hard/hard against themselves.

9. Use of the porous SiC bearing materials according to Claim 1 in the form of protective shaft sleeves and components for sliding bearings.

**Revendications**

1. Matériau glissant poreux en SiC fritté sans pression ayant de 3 à 10 % en volume de pores fermés indépendants, qui est caractérisé en ce qu'il présente une porosité trimodale se composant de micropores (M), de macropores en forme de fibres (F) et de macropores sphériques (S), dont les proportions quantitatives dans le système de pores F - M - S (figure 1) sont déterminées par la surface trapézoïdale avec les points de coin

$$a = 10 \text{ \% } M - 80 \text{ \% } F - 10 \text{ \% } S$$

$$b = 10 \text{ \% } M - 10 \text{ \% } F - 80 \text{ \% } S$$

$$c = 40 \text{ \% } M - 10 \text{ \% } F - 50 \text{ \% } S$$

$$d = 40 \text{ \% } M - 50 \text{ \% } F - 10 \text{ \% } S$$

et les micropores possèdent un diamètre inférieur ou égal à 5 microns et les macropores sous forme de fibres un diamètre inférieur ou égal à 30 microns et une longueur inférieure ou égale à 80 microns, et les macropores sphériques un diamètre inférieur ou égal à 70 microns et la résistance à la flexion est d'au moins 250 MN/m$^2$.

2. Matériaux glissants en SiC selon la revendication 1, caractérisés en ce que la matrice cristalline en SiC, dense, présente à côté des pores, se compose de carbure de silicium alpha en forme de cristallites prismatiques en forme de paillettes d'une grandeur de grain moyenne < 50 microns avec jusqu'à 2 pour cent en poids (somme) de carbone élémentaire, d'aluminium et/ou de bore.

3. Procédé de fabrication de matériaux glissants poreux selon la revendication 1 ou 2, caractérisé en ce que l'on ajoute à la poudre de SiC-alpha, finement divisée, ayant réagi avec des additifs de frittage et des agents auxiliaires de compression, des fibres organiques courtes et des billes de matière synthétique d'une répartition dimensionnelle étroite dans le rapport pondéral de fibres à billes de 9 à 1 à 1 à 9, dans une quantité de 1 à 3,5 parties en poids, par rapport à la poudre de SiC dopée, en ce que l'on comprime le mélange pulvérulent homogénéisé par moulage pour former des comprimés verts, en ce que l'on procède au chauffage préalable des comprimés verts en présence d'une atmosphère protectrice à des températures allant jusqu'à 1000°C et en ce que l'on procède ensuite au frittage des comprimés verts préchauffés à des températures de 2000°C à 2100°C jusqu'à la formation de corps frittés d'une densité de 90 % à 97 % de la densité pure du carbure de silicium.

4. Procédé selon la revendication 3, caractérisé en ce que l'on utilise, en tant qu'additifs de frittage, du nitrure d'aluminium et/ou de bore ainsi que du carbone dans des quantités allant jusqu'à 2 pour cent en poids.

5. Procédé selon la revendication 3 ou 4, caractérisé en ce que l'on utilise, en tant que fibres organiques courtes, de la cellulose ayant une répartition dimensionnelle de $d_F$ = 8 - 30 microns et de $l_F$ = 15 - 90 microns ($d_F$ = diamètre des fibres, $l_F$ = longueur des fibres).

6. Procédé selon l'une quelconque des revendications 3 à 5, caractérisé en ce que l'on utilise, en tant que billes de matière synthétique, des billes de polyméthacrylate de méthyle (PMMA) ayant une répartition dimensionnelle $d_S$ = 40 - 80 microns ($d_S$ = diamètre des billes).

7. Procédé selon l'une quelconque ou plusieurs des revendications 3 à 6, caractérisé en ce que le frittage des comprimés verts préchauffés est effectué en présence d'une atmosphère inerte à une pression de $\leq$ 30 mbar.

8. Utilisation des matériaux glissants poreux en SiC conformément à la revendication 1 ou 2 en tant que bagues d'étanchéité dans des joints annulaires glissants axiaux dans le couplage dur/mou contre le graphite de charbon ou dans le couplage dur/dur réciproque.

9. Utilisation des matériaux glissants poreux en SiC conformément à la revendication 1 ou 2 sous la forme de douilles de protection d'arbres et de pièces pour paliers à glissement.

Fig. 1

Fig. 2

SiC

KUGELPOREN

FASERPOREN

MIKROPOREN

100µm

_Fig. 3_